Europäisches Patentamt

**European Patent Office**

**Office européen des brevets**

(19)

(11) Numéro de publication: **0 214 896**
**B1**

(12)

# FASCICULE DE BREVET EUROPEEN

(45) Date de publication du fascicule du brevet:
**09.05.90**

(51) Int. Cl.⁵: **F16C 32/04, F16C 39/06**

(21) Numéro de dépôt: **86401778.5**

(22) Date de dépôt: **08.08.86**

(54) **Palier magnétique radial de grand diamètre.**

(30) Priorité: **12.08.85 FR 8512294**

(43) Date de publication de la demande:
**18.03.87 Bulletin 87/12**

(45) Mention de la délivrance du brevet:
**09.05.90 Bulletin 90/19**

(84) Etats contractants désignés:
**CH DE GB IT LI SE**

(56) Documents cités:
**DE-A- 2 223 218**
**FR-A- 2 458 927**

(73) Titulaire: **SOCIETE EUROPEENNE DE PROPULSION (S.E.P.) Société Anonyme dite:, 24 Rue Salomon de Rothschild, F-92150 Suresnes(FR)**

(72) Inventeur: **Habermann, Helmut, 63 rue de Bizy, F-27200 Vernon(FR)**
Inventeur: **Brunet, Maurice, Le Bout aux Roussel, Ste Colombe F-27950 St Marcel(FR)**

(74) Mandataire: **Thévenet, Jean-Bruno et ai, Cabinet BEAU DE LOMENIE 55 rue d'Amsterdam, F-75008 Paris(FR)**

ACTORUM AG

## Description

La présente invention a pour objet un palier magnétique radial de diamètre extérieur supérieur à environ un mètre, comprenant un rotor intérieur constitué par un arbre central et un empilage de tôles ferromagnétiques rapportées à la périphérie de l'arbre central, et un stator extérieur constitué par un ensemble d'électro-aimants dont les pôles sont disposés en regard de l'empilage de tôles ferromagnétiques du rotor.

Dans les paliers magnétiques classiques tels que ceux connus notamment par le document DE-A 2 223 218, l'arbre central du rotor porte à sa périphérie un empilage de tôles magnétiues qui se présentent sous la forme de rondelles coaxiales à l'arbre central et permettent au champ magnétique créé par les électro-aimants du stator du palier magnétique de se refermer à travers un matériau de meilleure qualité, du point de vue magnétique, que l'arbre central.

Lorsque le palier magnétique présente un diamètre important, la vitesse tangentielle à la périphérie des tôles du rotor induit cependant des contraintes non négligeables sur les tôles en forme de rondelle, dont les propriétés mécaniques sont relativement médiocres, de sorte que la vitesse de rotation du rotor doit être limitée.

Par ailleurs, la réalisation de tôles de grand diamètre en forme de rondelles implique de disposer de tôles de grandes dimensions et conduit, lors du découpage de ces tôles en rondelles, à la formation de nombreuses chutes.

De plus, en pratique, il est particulièrement difficile de réaliser des tôles de grandes dimensions qui à la fois soient de très bonne qualité du point de vue magnétique et présentant une faible épaisseur.

La présente invention vise à remédier aux inconvénients précités et à permettre la réalisation d'un palier magnétique radial de grand diamètre dont la fabrication est économique, qui présente de faibles pertes par courants de Foucault et dans lequel la vitesse de rotation du rotor peut être élevée.

Ces buts sont atteints grâce à un palier magnétique radial du type défini en tête de la description, qui est caractérisé en ce que l'empilage de tôles ferromagnétiques du rotor comprend un ensemble de tôles individuelles qui présentent chacune une épaisseur de l'ordre de 0,1 mm, s'étendent chacune sur un secteur angulaire limité de la périphérie de l'arbre central et sont réparties dans des plans parallèles de manière à constituer une succession d'anneaux divisés plats perpendiculaires à l'axe du rotor et en ce que les tôles individuelles d'un même plan sont décalées angulairement par rapport aux tôles individuelles des plans de manière à réaliser un empilage de tôles en quinconce.

Selon une caractéristique de l'invention, des rainures sont formées à la périphérie de l'arbre central du rotor, dans le sens longitudinal de celui-ci, et les tôles individuelles présentent des parties saillantes s'engageant dans lesdites rainures de l'arbre central.

Dans ce cas, de préférence, les tôles individuelles sont montées sur l'arbre central du rotor par un assemblage du type queue d'aronde.

Suivant un mode particulier de réalisation, chaque tôle individuelle s'étend à la périphérie de l'arbre central selon un secteur angulaire de l'ordre de 30°.

Chaque rangée de tôles individuelles peut comprendre dix tôles individuelles s'étendant chacune à la périphérie de l'arbre central selon un secteur angulaire de 36°.

Les rainures formées à la périphérie de l'arbre central sont séparées les unes des autres par des arcs pouvant être de l'ordre de 9°.

L'entrefer entre deux tôles individuelles adjacentes d'un même plan est de préférence inférieur à quelques dixièmes de millimètre.

D'autres caractéristiques et avantages de l'invention ressortiront de la description suivante d'un mode particulier de réalisation de l'invention, donnée à titre d'exemple, en référence aux dessins annexés, sur lesquels:

- la figure 1 est une vue schématique, en coupe radiale, d'un palier magnétique radial selon l'invention,
- la figure 2 est une vue de dessus, selon la flèche F, du rotor du palier radial de la figure 1,
- la figure 3 est une vue partielle en coupe radiale de la partie périphérique du rotor de palier des figures 1 et 2 montrant une tôle individuelle s'étendant sur un secteur angulaire limité de la périphérie du rotor, et
- la figure 4 montre une tôle individuelle qui constitue une variante de réalisation de la tôle de la figure 3.

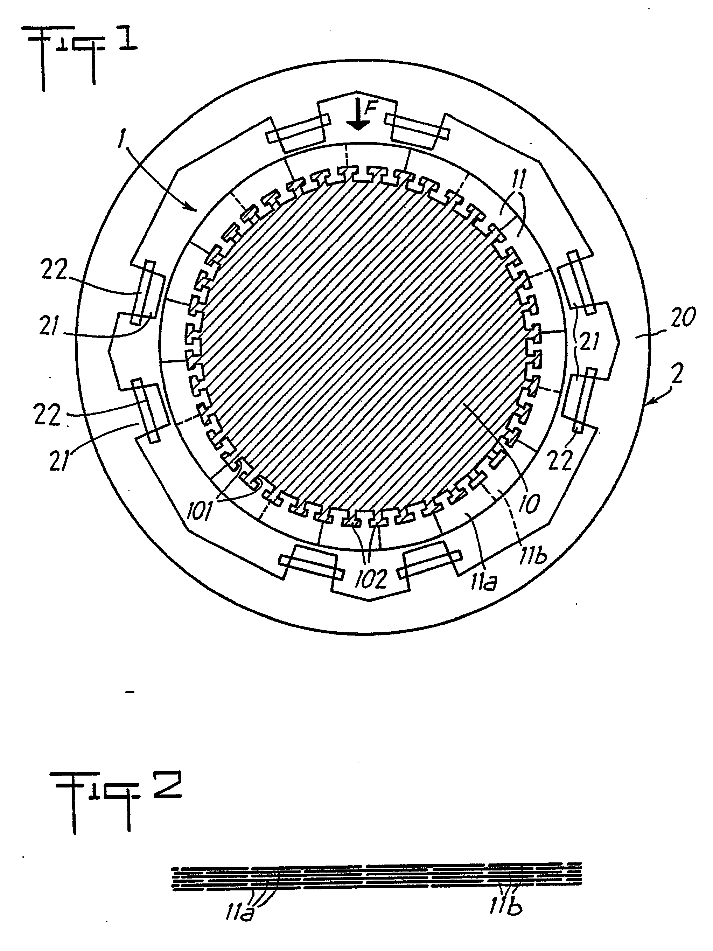

On voit sur la figure 1 un palier magnétique radial actif de grand diamètre conforme à l'invention, dans lequel un stator 2 entoure un rotor 1. Le stator 2 comprend un circuit magnétique présentant une partie périphérique 20 qui réunit entre elles plusieurs paires de pôles 21 faisant saillie radialement en direction du rotor 1. Des enroulements d'électroaimant 22 sont disposés autour des différentes pièces polaires 21. La présence de quatre paires de pôles 21 réparties selon deux axes rectangulaires XX' et YY' permet de maintenir le rotor 1 dans une position radiale prédéterminée. Les détecteurs de la position radiale du rotor 1 et les circuits d'asservissement du courant d'alimentation des enroulements d'électro-aimants 22 du stator 2 sont classiques et ne seront donc pas décrits de façon plus détaillée dans la présente description.

Le rotor 1 comprend un arbre central 10 qui porte à sa périphérie un empilage de tôles magnétiques 11 de bonne qualité, par exemple en fer au silicium. Les pôles 21 du stator 2 font ainsi face à l'empilage de tôles magnétiques 11 et définissent avec les rebords extérieurs de celles-ci des entrefers de faible valeur, par exemple de l'ordre de 0,2 à 1mm.

L'arbre central 10 ne joue pas de rôle sur le plan magnétique, dans la mesure où les lignes du champ magnétique créé par les électro-aimants de stator 22 ne se referment que dans la partie périphérique du rotor constituée par l'empilage de tôles magnétiques 11. Par suite, l'arbre central 10 peut être réalisé en un acier très résistant mécaniquement et capable de supporter une charge élevée, et les propriétés magnétiques de cet acier peuvent elles-mêmes être médiocres.

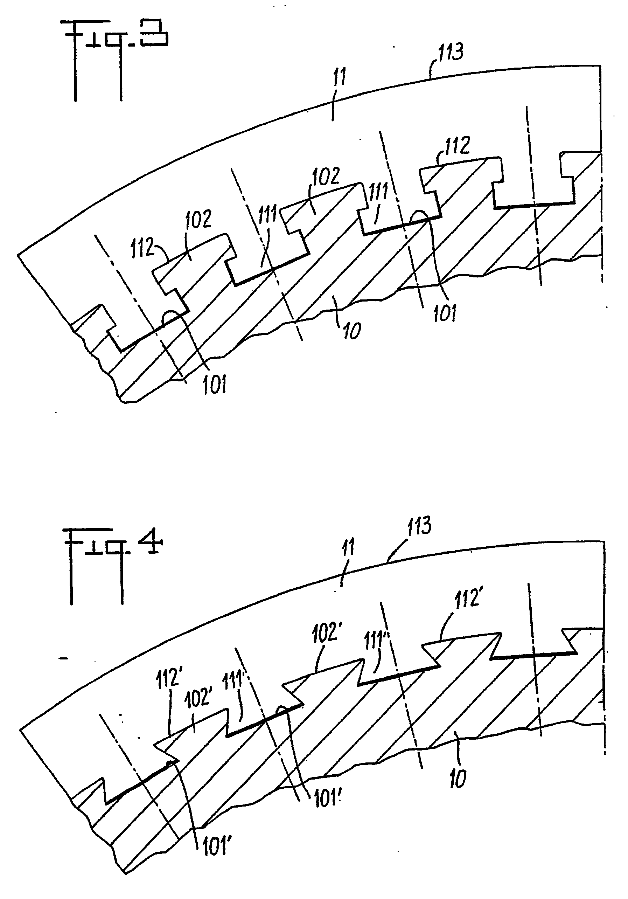

Comme on peut le voir sur les figures 1 et 3, des rainures 101 présentant une section en forme de T inversé sont ménagées à la périphérie de l'arbre central 10 et s'étendent dans le sens longitudinal du rotor 1. Des saillies 102 à section en forme de T sont ainsi définies entre les différentes rainures 101. Les rainures 101 sont régulièrement réparties à la périphérie de l'arbre 10 et définissent entre elles des arcs pouvant être de l'ordre de 9°. Dans ce cas, on réalise ainsi quarante rainures 101 à la périphérie de l'arbre central 10. Les tôles individuelles 11 qui constituent l'empilage rapporté autour de l'arbre central 10 présentent chacune la forme représentée sur la figure 3.

Une tôle individuelle 11 est constituée par une portion de bande de tôle qui s'étend sur un secteur angulaire limité à la périphérie de l'arbre central 10 du rotor 1. Chaque tôle individuelle peut ainsi s'étendre sur un secteur de par exemple 36°. De la sorte, dix tôles individuelles 11 placées dans un même plan et réparties à la périphérie de l'arbre 10 définissent une série de tôles individuelles successives placées côte à côte en ne réservant entre elles qu'un entrefer limité, inférieur à quelques dixièmes de millimètre.

Afin de réduire l'influence des entrefers supplémentaires entres les tôles individuelles adjacentes 11, les tôles individuelles de plans différents adjacents 11a, 11b (fig.2) sont disposées de façon décalée les unes par rapport aux autres de manière à définir un ensemble de tôles individuelles 11 superposées imbriquées en quinconce.

Chaque tôle individuelle 11, qui est découpée à partir d'une bande de tôle, par exemple d'une largeur de l'ordre de 300mm, présente un bord extérieur 113 incurvé qui constitue une partie de la périphérie du rotor 1 et un rebord intérieur qui est découpé de manière à définir une succession de parties en saillie en forme de T 111 et de parties en retrait ou encoches 112, en forme de T inversé, qui correspondent respectivement aux rainures 101 et parties en relief 102 de l'arbre central 10. Chaque tôle individuelle 11, qui, à titre d'exemple, s'étend sur un secteur angulaire de 36° et comporte sur son bord intérieur trois encoches centrales 112 et deux demi-encoches d'extrémité, est montée sur l'arbre central par engagement des quatre parties en saillie 111 dans des rainures 101 de l'arbre 10.

La figure 4 montre une variante de réalisation des tôles individuelles 11 qui permet un montage des tôles 11 sur le rotor 10 par un assemblage du type queue d'aronde. Dans ce cas, les encoches 112' et les parties en saillie 111' des tôles 11 sont de forme trapézoidale et les parties en relief 102' et rainures 101' correspondantes de la périphérie de l'arbre central 10 présentent également une section trapézoidale adaptée à celle des encoches 112' et parties saillantes 111' des tôles 11. La disposition imbriquée des différentes tôles 11 reste par ailleurs la même que celle décrite précédemment en référence aux figures 1 et 2.

Avec le mode de construction du rotor 1 décrit ci-dessus, il est possible d'utiliser des tôles magnétiques 11 de très faible épaisseur, par exemple de l'ordre de 0,1mm et de réaliser des empilages de par exemple une centaine de séries de tôles individuelles 11a, 11b, disposées dans des plans parallèles, même si le diamètre extérieur du rotor 1 doit être important, par exemple de l'ordre de 1m à 1,50m.

En effet, les tôles individuelles 11 en forme de secteur angulaire limité, couvrant par exemple un arc de l'ordre de 30°, peuvent être fabriquées facilement sans chutes importantes à partir de bandes de tôle, comme indiqué précédemment, et non à partir de tôles de grande surface comme lorsque l'on réalise un empilage classique de tôles rotoriques en forme de rondelles.

Ceci permet de choisir des tôles magnétiques de très bonne qualité et de très faible épaisseur, ce qui contribue à diminuer les pertes par courant de Foucault qui sont proportionnelles au carré de l'épaisseur des tôles.

Par ailleurs, la division des tôles en secteurs 11 permet de supprimer les contraintes tangentielles qui existent dans le cas de rotors feuilletés réalisés à partir d'empilages de rondelles, et donc d'augmenter la vitesse de rotation du rotor puisque la vitesse tangentielle limite peut être largement supérieure à 200m/s.

La largeur des tôles 11 peut être par exemple de l'ordre de 5 cm pour un rotor dont le diamètre est de l'ordre de 1,30 m.

L'entrefer supplémentaire réalisé entre deux tôles individuelles successives situées dans un même plan 11a ou 11b n'est pas gênant s'il reste limité et si les tôles individuelles de deux plans voisins sont bien décalées angulairement de manière à constituer un empilage de tôles qui se chevauchent et sont imbriquées en quinconce.

Il est possible d'envisager de substituer à chaque tôle individuelle un paquet de deux ou trois tôles superposées si chaque tôles du paquet de tôle présente elle-même une épaisseur réduite, de l'ordre de 0,1 mm. Dans ce cas, les tôles individuelles d'un anneau plat divisé sont décalées angulairement non pas par rapport aux tôles de l'anneau divisé plat immédiatement adjacent, mais par rapport aux tôles du deuxième ou du troisième anneau divisé plat à partir de l'anneau divisé plat considéré. Dans tous les cas, il est cependant essentiel que l'empilage de tôles présente une imbrication telle que du fait des chevauchements entre tôles individuelles ou petits paquets de tôles individuelles l'entrefer supplémentaire créé au niveau de la jonction entre deux tôles individuelles adjacentes successives situées dans un même plan ne présente, dans le sens circonférentiel qu'une valeur limitée à quelques dixièmes de millimètre.

**Revendications**

1. Palier magnétique radial de diamètre extérieur supérieur à environ un mètre, comprenant un rotor intérieur (1) constitué par un arbre central (10) et un empilage de tôles ferromagnétiques (11) rapportées à la périphérie de l'arbre central (10), et un stator extérieur (2) constitué par un ensemble d'électro-aimants (20, 21, 22) dont les pôles (21) sont disposés en regard de l'empilage de tôles ferromagnétiques (11) du rotor (1), caractérisé en ce que l'empilage de tôles ferromagnétiques (11) du rotor (1) comprend un ensemble de tôles individuelles (11) qui présentent chacune une épaisseur de l'ordre de 0,1 mm, s'étendent chacune sur un secteur angulaire limité de la périphérie de l'arbre central (10) et sont réparties dans des plans parallèles (11a, 11b) de manière à constituer une succession d'anneaux divisés plats perpendiculaires à l'axe du rotor (1) et en ce que les tôles individuelles d'un même plan (11a) sont décalées angulairement par rapport aux tôles individuelles des plans voisins (11b) de manière à réaliser un empilage de tôles en quinconce.

2. Palier magnétique selon la revendication 1, caractérisé en ce que des rainures (101; 101') sont formées à la périphérie de l'arbre central (10) du rotor (1), dans le sens longitudinal de celui-ci, et en ce que les tôles individuelles (11) présentent des parties saillantes (111; 111') s'engageant dans lesdites rainures (101; 101') de l'arbre central (1).

3. Palier magnétique selon la revendication 2, caractérisé en ce que les tôles individuelles sont montées sur l'arbre central (10) du rotor par un assemblage du type queue d'aronde.

4. Palier magnétique selon l'une quelconque des revendications 1 à 3, caractérisé en ce que chaque tôle individuelle (11) s'étend à la périphérie de l'arbre central (10) selon un secteur angulaire de l'ordre de 30°.

5. Palier magnétique selon l'une quelconque des revendications 1 à 4, caractérisé en ce que chaque rangée de tôles individuelles (11a, 11b) comprend dix tôles individuelles (11) s'étendant chacune à la périphérie de l'arbre central (10) selon un secteur angulaire de 36°.

6. Palier magnétique selon la revendication 2, caractérisé en ce que les rainures (101) formées à la périphérie de l'arbre central (10) sont séparées les unes des autres par des arcs de l'ordre de 9°.

7. Palier magnétique selon l'une quelconque des revendications 1 à 6, caractérisé en ce que l'empilage de tôles (11) comprend une centaine de séries (11a, 11b) de tôles individuelles disposées dans des plans parallèles.

8. Palier magnétique selon l'une quelconque des revendications 1 à 7, caractérisé en ce que l'entrefer entre deux tôles individuelles adjacentes situées dans un même plan (11a, ou 11b) est inférieur à quelques dixièmes de millimètres.

## Claims

1. Radial magnetic bearing of external diameter greater than about one meter, comprising an inner rotor (1) constituted by a central shaft (10) with a stack of ferromagnetic laminations (11) applied to the periphery of the central shaft (10), and an outer stator (2) constituted by a set of electromagnets (20, 21, 22) whose poles (21) are disposed facing the stack of ferromagnetic laminations (11) on the rotor (1), characterized in that said stack of ferromagnetic laminations (11) of the rotor (1) comprises a set of very thin individual laminations (11), each having a thickness of 0.1 mm and each extending over a limited angular sector around the periphery of the central shaft (10), which laminations are distributed in parallel planes (11a, 11b) so as to constitute a succession of flat split rings extending perpendicularly to the axis of the rotor (1), and in that the individual laminations in a given plane (11a) are offset angularly relative to the individual laminations of adjacent planes (11b) in such a manner as to provide a staggered stack of laminations.

2. Magnetic bearing according to claim 1, characterized in that longitudinally-extending grooves (101; 101') are formed in the periphery of the central shaft (10) of the rotor (1), and in that the individual laminations (11) have projecting portions (111; 111') which engage in said grooves (101; 101') of the central shaft (1).

3. Magnetic bearing according to claim 2, characterized in that the individual laminations (11) are mounted on the central shaft (10) of the rotor by a dovetail type assembly.

4. Magnetic bearing according to any one of claims 1 to 3, characterized in that each individual lamination (11) extends through an angular sector of about 30° around the periphery of the central shaft (10).

5. Magnetic bearing according to any one of claims 1 to 4, characterized in that each row of individual laminations (11a, 11b) comprises ten individual laminations (11) each extending through an angular sector of 36° around the periphery of the central shaft (10).

6. Magnetic bearing according to claim 2, characterized in that the grooves (101) formed in the periphery of the central shaft (10) are separated from one another at a pitch of about 9°.

7. Magnetic bearing according to any one of claims 1 to 6, characterized in that the stack of laminations (11) comprises about one hundred series (11a, 11b) of individual laminations disposed in parallel planes.

8. Magnetic bearing according to any one of claims 1 to 7, characterized in that the air gap between two adjacent individual laminations situated in the same plane (11a or 11b) is less than a few tenths of a millimeter wide.

## Patentansprüche

1. Radiales Magnetlager mit einem Außendurchmesser größer als ungefähr 1 m, das einen inneren Rotor (1), der aus einer zentralen Welle (10) und einem Stapel von ferromagnetischen Blechen (11) gebildet ist, die am Umfang der zentralen Welle (10) angeordnet sind, und einen äußeren Stator (2) aufweist, der durch eine Anordnung von Elektromagneten (20, 21, 22) gebildet ist, deren Pole (21) gegenüber dem Stapel von ferromagnetischen Blechen (11) des Rotors (1) angeordnet sind, dadurch gekennzeichnet, daß der Stapel von ferromagnetischen Blechen (11) des Rotors (1) eine Anordnung von Einzelblechen (11) aufweist, die jeweils eine Dicke in der Größenordnung von 0,1 mm aufweisen, welche sich jeweils auf einem begrenzten winkeligen Abschnitt des Umfangs der zentralen Welle (10) erstrecken und in parallelen Ebenen (11a, 11b) derart verteilt angeordnet sind, um eine Aufeinanderfolge von geteilten, ebenen Ringen senkrecht zur Achse des Rotors (1) zu bilden, und daß die einzelnen Bleche einer selben Ebene (11a) winkelig versetzt bezüglich der einzelnen Bleche der benachbarten Ebenen (11b) derart angeordnet sind, um eine versetzte Stapelung von Blechen zu bilden.

2. Magnetlager nach Anspruch 1, dadurch gekennzeichnet, daß Kerben (101, 101') an der Peripherie der zentralen Welle (10) des Rotors (1) in Längsrichtung von diesem gebildet sind, und daß die einzelnen Bleche (11) vorspringende Bereiche (111, 111') aufweisen, die in Eingriff stehen mit den genannten Kerben (101; 101') der zentralen Welle (1).

3. Magnetlager nach Anspruch 2, dadurch gekennzeichnet, daß die einzelnen Bleche (11) an der zentralen Welle (10) des Rotors durch eine schwalbenschwanzförmige Anordnung angebracht sind.

4. Magnetlager nach einem der Ansprüche 1 bis 3, dadurch gekennzeichnet, daß jedes einzelne Blech (11) sich am Umfang der zentralen Welle (10) gemäß einem winkeligen Abschnitt in der Größenordnung von 30° erstreckt.

5. Magnetlager nach einem der Ansprüche 1 bis 4, dadurch gekennzeichnet, daß jede Reihe von einzelnen Blechen (11a, 11b) zehn einzelne Bleche (11) aufweist, die sich jeweils am Umfang der zentralen Welle (10) gemäß einem winkeligen Abschnitt von 36° erstrecken.

6. Magnetlager nach Anspruch 2, dadurch gekennzeichnet, daß die Kerben (101), die am Umfang der zentralen Welle (10) ausgebildet sind, voneinander getrennt sind durch Bögen in der Größenordnung von 9°.

7. Magnetlager nach einem der Ansprüche 1 bis 6, dadurch gekennzeichnet, daß die Stapelung der Bleche (11) eine Hundertschaft von einzelnen Blechreihen (11a, 11b) aufweist, die in parallelen Ebenen angeordnet sind.

8. Magnetlager nach einem der Ansprüche 1 bis 7, dadurch gekennzeichnet, daß der Zwischenraum zwischen zwei einzelnen benachbarten Blechen, die in einer selben Ebene (11a oder 11b) angeordnet sind, geringer ist als einige Zehntel Millimeter.

Fig. 1

Fig. 2

Fig.3

Fig.4